# EUROPÄISCHE PATENTSCHRIFT

(11) **EP 3 850 252 B1**
(45) Veröffentlichungstag und Bekanntmachung des Hinweises auf die Patenterteilung: **22.02.2023**
(21) Anmeldenummer: 19742713.1
(22) Anmeldetag: 17.07.2019
(51) Int. Cl.: F16K 31/06, F16K 31/40, F16K 39/02

(54) **VENTILVORRICHTUNG FÜR EIN GASFÖRMIGES MEDIUM UND TANKVORRICHTUNG ZUR SPEICHERUNG EINES GASFÖRMIGEN MEDIUMS**
VALVE DEVICE FOR A GASEOUS MEDIUM, AND TANK DEVICE FOR STORING A GASEOUS MEDIUM
ENSEMBLE SOUPAPE CONÇU POUR UN MILIEU GAZEUX ET ENSEMBLE RÉSERVOIR CONÇU POUR STOCKER UN MILIEU GAZEUX

(30) Priorität: 11.09.2018 DE 102018215380
(43) Veröffentlichungstag der Anmeldung: 21.07.2021
(73) Patentinhaber: Robert Bosch GmbH, 70442 Stuttgart (DE)
(72) Erfinder: GRIMMINGER, Christian, 71229 Leonberg (DE); BEIER, Marco, 07407 Rudolstadt (DE)
(86) Internationale Anmeldenummer: PCT/EP2019/069267
(87) Internationale Veröffentlichungsnummer: WO 2020/052834

(56) Entgegenhaltungen:
- DE-A1-102006 011 755
- DE-A1-102015 221 423
- JP-A- 2001 227 670
- US-A- 3 100 103
- US-A1- 2004 155 215
- US-A1- 2011 068 286
- US-A1- 2013 186 487
- US-A1- 2014 166 915
- US-B2- 9 366 357

## Beschreibung

Die Erfindung betrifft eine Ventilvorrichtung für ein gasförmiges Medium und eine Tankvorrichtung für einen Brennstoffzellentank, insbesondere zur Speicherung von Wasserstoff, beispielsweise zur Anwendung in Fahrzeugen mit Brennstoffzellenantrieb.

### Stand der Technik

Die nicht vorveröffentlichte DE 10 2018 209 057 A1 beschreibt eine Tankvorrichtung zur Temperaturdruckentlastung eines Brennstoffzellentanks, wobei die Tankvorrichtung Tankbehälter mit verschiedenen Ventilen, wie beispielsweise ein Absperrventil umfasst, welche eine ordentliche Funktionsweise beispielsweise eines Brennstoffzellensystems gewährleisten.

Die Sicherheitsvorrichtungen für solch eine Tankvorrichtung sind normiert. Dabei muss jede Tankvorrichtung solch ein Absperrventil aufweisen. So kann das Absperrventil bei einer Beschädigung der Tankvorrichtung hervorgerufen durch einen Unfall des Fahrzeugs mit Brennstoffzellenantrieb oder bei einem Bruch einer Leitung der Tankvorrichtung die Tankbehälter verschließen, so dass kein Gas aus der Speichereinheit austreten kann.

Die US 2004/155215 A1 beschreibt ein magnetgesteuertes Ventil zum Durchströmen eines unter Druck stehenden Mediums.

Die DE 10 2006 011755 A1 beschreibt ebenfalls ein elektromagnetisches Ventil zum Durchfluss eines Fluids.

Die DE 10 2015 221423 A1 beschreibt auch ein Hochdruck-Magnetventil zum Durchströmen eines Gases.

US2013/186487A1 und US9366 357B2 offenbaren Tankvorrichtungen zur Speicherung eines gasförmigen Mediums mit einem Tank und einer Ventilvorrichung.

Aufgrund der hohen Sicherheitsanforderungen an die Absperrventile und aufgrund hoher Systemdrücke von beispielsweise 800 bar oder mehr sind solche Absperrventile konstruktiv sehr herausfordernd und weisen einen großen Bauraum auf. Dies erhöht wiederum das Gesamtgewicht der gesamten Tankvorrichtung, was im Falle eines Unfalls des Fahrzeugs mit Brennstoffzellenantrieb zu hohen auftretenden Beschleunigungskräften und möglichen Verformungen der Ventilvorrichtung oder der Tankvorrichtung führen kann.

### Vorteile der Erfindung

Die erfindungsgemäße Ventilvorrichtung mit den kennzeichnenden Merkmalen des Anspruchs 1 weist demgegenüber den Vorteil auf, dass in konstruktiv einfacher Funktionsweise der Bauraum der Ventilvorrichtung durch Verwendung eines doppelhubigen Schaltventils reduziert wird.

Dazu weist die erfindungsgemäße Ventilvorrichtung für ein gasförmiges Medium, insbesondere Wasserstoff, ein Ventilgehäuse auf, in dem ein entlang einer Längsachse bewegbarer erster Magnetanker angeordnet ist. Der erste Magnetanker wirkt mit einem ersten Dichtsitz zum Öffnen und Schließen einer Auslassöffnung zusammen. Weiterhin ist in dem Ventilgehäuse ein entlang einer Längsachse bewegbarer zweiter Magnetanker angeordnet, welcher zweiter Magnetanker in einer Ausnehmung des ersten Magnetankers zumindest teilweise aufgenommen ist und welcher zweiter Magnetanker mit einem zweiten Dichtsitz zum Öffnen und Schließen einer in dem ersten Magnetanker ausgebildeten Durchlassöffnung zusammenwirkt. Darüber hinaus sind der erste Magnetanker und der zweite Magnetanker von einer Magneteinrichtung umfasst, durch welche Magneteinrichtung der erste Magnetanker und der zweite Magnetanker mittels genau einer Magnetspule entlang der Längsachse bewegbar sind.

Erfindungsgemäß ist die Ventilvorrichtung in einer Tankvorrichtung zur Speicherung eines gasförmigen Mediums, insbesondere Wasserstoff, mit einem Tank eingesetzt. Der Tank umfasst ein Tankgehäuse mit einem Halsbereich, in welchem Halsbereich die Ventilvorrichtung angeordnet ist, wobei das Ventilgehäuse in das Tankgehäuse zumindest teilweise integriert ist und das Ventilgehäuse mittels eines Dichtelements einen Tankinnenraum des Tanks abdichtet, wobei durch die Ventilvorrichtung ein Durchflussquerschnitt an gasförmigem Medium, insbesondere Wasserstoff, aus dem Tank steuerbar ist.

Durch die Verwendung von nur einer Magnetspule wird eine Reduzierung des Bauraums und des Gesamtgewichts der Ventilvorrichtung erzielt. Weiterhin sind aufgrund des Einsatzes von zwei miteinander wechselwirkenden Magnetankern keine Steuerräume notwendig, wodurch ebenfalls Bauraum minimiert wird. Zusätzlich ist aufgrund des doppelhubigen Schaltventils mit zwei Magnetankern für die Öffnung der Ventilvorrichtung eine kleine magnetische Kraft ausreichend.

In erster vorteilhafter Weiterbildung ist es vorgesehen, dass die Magnetspule ein Spulengehäuse aufweist und den ersten Magnetanker und den zweiten Magnetanker in dem Ventilgehäuse zumindest teilweise umgibt. So kann in einfacher Weise bei aktiver Magnetspule eine magnetische Kraft auf den ersten Magnetanker und den zweiten Magnetanker erzeugt werden.

In weiterer Ausgestaltung der Erfindung ist es vorteilhaft vorgesehen, dass in dem Ventilgehäuse eine Feder angeordnet ist, welche Feder den zweiten Magnetanker mit einer Kraft in Richtung des zweiten Dichtsitzes beaufschlagt, wodurch der erste Magnetanker mit einer Kraft in Richtung des ersten Dichtsitzes beaufschlagt ist.

In vorteilhafter Weiterbildung ist in dem Ventilgehäuse ein Anschlagselement angeordnet, an welchem Anschlagselement der erste Dichtsitz ausgebildet ist. Vorteilhafterweise ist ein Strömungsquerschnitt an dem ersten Dichtsitz größer als ein Strömungsquerschnitt an dem zweiten Dichtsitz. So ist in einfacher Weise und mit kleiner magnetischer Kraft der zweite Magnetanker längsbewegbar und öffnet beim Abheben von dem zweiten Dichtsitz einen Strömungsquerschnitt über den zweiten Dichtsitz. Durch die sich dadurch verändernden Druckverhältnisse in der Ventilvorrichtung wird die Öffnung des ersten Dichtsitzes und damit die Längsbewegung des ersten Magnetankers beschleunigt und die notwendige Höhe der magnetischen Kraft kann so reduziert werden.

In weiterer Ausgestaltung der Erfindung ist es vorteilhaft vorgesehen, dass der erste Magnetanker einen Absatz aufweist, welcher Absatz mit einem Absatz des zweiten Magnetankers zusammenwirkt und bei einer Längsbewegung des zweiten Magnetankers dieser als Mitnehmer für den ersten Magnetanker dient. Dadurch kann die Öffnung des ersten Dichtsitzes und damit die Längsbewegung des ersten Magnetankers beschleunigt werden.

Die beschriebene Tankvorrichtung eignet sich vorzugsweise in einer Brennstoffzellenanordnung zur Speicherung von Wasserstoff für den Betrieb einer Brennstoffzelle.

### Zeichnungen

In der Zeichnung sind Ausführungsbeispiele einer erfindungsgemäßen Ventilvorrichtung für ein gasförmiges Medium, insbesondere Wasserstoff, und eine erfindungsgemäße Tankvorrichtung zur Speicherung eines gasförmigen Mediums dargestellt. Es zeigt in
- Fig. 1: ein erstes Ausführungsbeispiel einer erfindungsgemäßen Ventilvorrichtung in einer Tankvorrichtung im Längsschnitt,
- Fig. 2: ein zweites Ausführungsbeispiel einer erfindungsgemäßen Ventilvorrichtung in einer Tankvorrichtung im Längsschnitt.

### Beschreibung der Ausführungsbeispiele

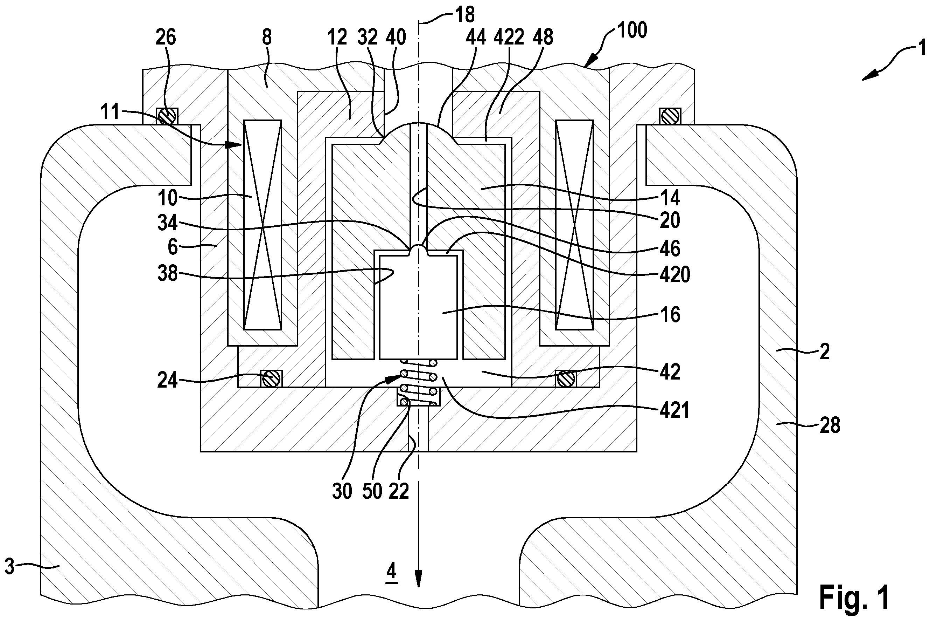

**Fig.1** zeigt ein erstes Ausführungsbeispiel einer erfindungsgemäßen Ventilvorrichtung 100 für ein gasförmiges Medium, insbesondere Wasserstoff, in einer erfindungsgemäßen Tankvorrichtung 1 zur Speicherung eines gasförmigen Mediums, insbesondere Wasserstoff, im Längsschnitt.

Die Ventilvorrichtung 100 weist ein Ventilgehäuse 6 mit einer Längsachse 18 auf. In dem Ventilgehäuse 6 sind eine Einlassöffnung 22 und eine Auslassöffnung 40 ausgebildet, welche in einen Innenraum 42 münden. Weiterhin ist in dem Ventilgehäuse 6 eine Magnetspule 10 mit einem Spulengehäuse 8 angeordnet. Das Ventilgehäuse 6 umfasst weiterhin ein Anschlagselement 12, welches von dem Spulengehäuse 8 umgeben ist und welches mittels Dichtelementen 24 die Magnetspule 10 gegen den Innenraum 42 abdichtet.

In dem Innenraum 42 ist ein entlang der Längsachse 18 bewegbarer erster Magnetanker 14 angeordnet, welcher mit einer Anformung 44 mit einem ersten Dichtsitz 32 zum Öffnen und Schließen der Auslassöffnung 40 zusammenwirkt. Der erste Dichtsitz 32 ist hier an einem Absatz 48 des Anschlagselements 12 ausgebildet. In dem ersten Magnetanker 14 ist eine Durchlassöffnung 20 ausgebildet, welche an dem dem ersten Dichtsitz 32 abgewandten Ende des ersten Magnetankers 14 in eine Ausnehmung 38 mündet.

In der Ausnehmung 38 ist ein entlang der Längsachse 18 bewegbarer zweiter Magnetanker 16 aufgenommen, welcher mit einer Anformung 46 mit einem zweiten Dichtsitz 34 zum Öffnen und Schließen der Durchlassöffnung 20 in dem ersten Magnetanker 14 zusammenwirkt. Der zweite Dichtsitz 34 ist an dem ersten Magnetanker 14 ausgebildet.

Mittels einer Feder 30, welche in einer Ausnehmung 50 des Ventilgehäuses 6 angeordnet ist und sich zwischen dem zweiten Magnetanker 16 und dem Ventilgehäuse 6 abstützt, wird der zweite Magnetanker 16 mit einer Kraft in Richtung des zweiten Dichtsitzes 34 beaufschlagt, so dass der zweite Magnetanker 16 an dem zweiten Dichtsitz 34 aufliegt. Die Durchlassöffnung 20 ist somit geschlossen.

Durch die Wirkverbundenheit des ersten Magnetankers 14 mit dem zweiten Magnetanker 16 wird der erste Magnetanker 14 mittels der Feder 30 gegen den ersten Dichtsitz 32 gedrückt, so dass die Auslassöffnung 40 geschlossen ist.

Der Innenraum 42 ist durch den ersten Magnetanker 14 und den zweiten Magnetanker 16 in einen äußeren Ringraum 422, einen inneren Ringraum 420 und einen Federraum 421 aufgeteilt. Der äußere Ringraum 422 ist dabei durch das Anschlagselement 12 und den ersten Magnetanker 14 begrenzt, wohingegen der innere Ringraum 420 durch den ersten Magnetanker 14 und den zweiten Magnetanker 16 begrenzt ist.

Sowohl der innere Ringraum 420 als auch der äußere Ringraum 422 münden in den Federraum 421, wobei der Federraum 421 die Ausnehmung 50 des Ventilgehäuses 6 umfasst und in die Einlassöffnung 22 übergeht.

Die Ventilvorrichtung 100 ist Teil einer Tankvorrichtung 1 mit einem Tank 2. Der Tank 2 weist ein Tankgehäuse 3 auf, in dem ein Tankinnenraum 4 ausgebildet ist. Das Tankgehäuse 3 weist einen Halsbereich 28 auf, in dem die Ventilvorrichtung 100 angeordnet ist. Dabei ist diese in das Tankgehäuse 3 integriert und verschließt dabei den Tankinnenraum 4 nach außen. Mittels Dichtelemente 26 zwischen des Ventilgehäuses 6 der Ventilvorrichtung 100 und dem Tankgehäuse 3 des Tanks 2 ist der Tankinnenraum 4 abgedichtet, so dass gasförmiges Medium, insbesondere Wasserstoff, lediglich über die Ventilvorrichtung 100 aus dem Tank 2 ein- bzw. ausströmen kann.

Der erste Magnetanker 14 und der zweite Magnetanker 16 bilden zusammen mit der Magnetspule 10 und dem Spulengehäuse 8 eine Magneteinrichtung 11 aus.

Ein Strömungsquerschnitt des gasförmigen Mediums an dem ersten Ventilsitz 32 ist dabei größer als ein Strömungsquerschnitt des gasförmigen Mediums an dem zweiten Ventilsitz 34, da der Durchmesser der zylinderförmig ausgebildeten Auslassöffnung 40 größer ist als der Durchmesser der zylinderförmigen Durchlassöffnung 20.

### Funktionsweise der Ventilvorrichtung

Bei nicht bestromter Magnetspule 10 sind der erste Ventilsitz 32 und der zweite Ventilsitz 34 durch die Kraft der Feder 30 geschlossen, so dass die Verbindungen zwischen dem äußeren Ringraum 422 und der Auslassöffnung 40 und zwischen dem inneren Ringraum 420 und der Durchlassöffnung 20 geschlossen sind. Somit kann auch kein gasförmiges Medium aus dem Tankinnenraum 4 über die Einlassöffnung 22 und die Auslassöffnung 40 in Richtung eines Systems, beispielsweise einer Brennstoffzellenanordnung, strömen. In dem Tankinnenraum 4 herrscht Hochdruck von beispielsweise 700 bar. In der Brennstoffzellenanordnung hingegen herrscht Niederdruck.

Wird die Magnetspule 10 bestromt, so wird eine magnetische Kraft auf den ersten Magnetanker 14 und den zweiten Magnetanker 16 erzeugt, welche der Kraft der Feder 30 und den Druckkräften an dem ersten Dichtsitz 32 und an dem zweiten Dichtsitz 34 entgegengerichtet ist. Der kleinere Sitzdurchmesser an dem zweiten Dichtsitz 34 im Vergleich zu dem Sitzdurchmesser an dem ersten Dichtsitz 32 hat zur Folge, dass für die Öffnung des zweiten Dichtsitzes 34 eine geringere magnetische Kraft notwendig ist als für die Öffnung des ersten Dichtsitzes 32. Bei genügend hoher Magnetkraft hebt der zweite Magnetanker 16 von dem zweiten Magnetanker 16 ab und gibt die Durchlassöffnung 20 frei.

Gasförmiges Medium strömt nun aus dem Tankinnenraum 4 über die Einlassöffnung 22, den zweiten Dichtsitz 34, die Durchlassöffnung 20 und die Auslassöffnung 40 aus dem Tank 2 in Richtung eines Systems, beispielsweise einer Brennstoffzellenanordnung. Dadurch steigt der Druck in dem System an, was dazu führt, dass sich die Druckdifferenz an dem ersten Dichtsitz 32 verringert. Durch die Verringerung der Druckdifferenz an dem ersten Dichtsitz 32 reduziert sich auch die Kraft, die der magnetischen Öffnungskraft entgegensteht. Die zunehmende Abnahme der Druckdifferenz führt zu einer Öffnung des ersten Dichtsitzes 32. Der erste Magnetanker 14 hebt somit von dem ersten Dichtsitz 32 ab und öffnet so eine Verbindung zwischen der Auslassöffnung 40 und dem äußeren Ringraum 422. Nun strömt gasförmiges Medium, hier Wasserstoff, aus dem Tankinnenraum 4 über die Einlassöffnung 22, den äußeren Ringraum 422, den ersten Dichtsitz 32 und die Auslassöffnung 40 aus dem Tank 2 in Richtung einer Brennstoffzelle der Brennstoffzellenanordnung.

Soll die Wasserstoff-Zufuhr zu der Brennstoffzelle unterbrochen werden, wird die Magnetspule 10 nicht weiter bestromt, so dass die magnetische Kraft abgebaut wird und sich der zweite Magnetanker 16 durch die Kraft der Feder 30 wieder in Richtung des zweiten Dichtsitzes 34 bewegt und diesen schließt. Der zweite Magnetanker 16 wirkt hier als Mitnehmer für den ersten Magnetanker 14, so dass auch der erste Dichtsitz 32 wieder geschlossen ist.

Der Durchmesser an dem ersten Dichtsitz 32 und der Hub des ersten Magnetankers 14 ist vorteilhafterweise so ausgelegt, dass die Brennstoffzelle in allen Betriebszuständen mit einem ausreichenden Massenstrom an Wasserstoff versorgt wird. Außerdem kann dadurch im Falle einer Befüllung des Tanks 2 mit gasförmigem Medium, hier Wasserstoff, bei dem die Strömrichtung von der Auslassöffnung 40 in Richtung der Einlassöffnung 22 verläuft, der Tank 2 in kurzer Zeit, beispielsweise in wenigen Minuten, befüllt werden.

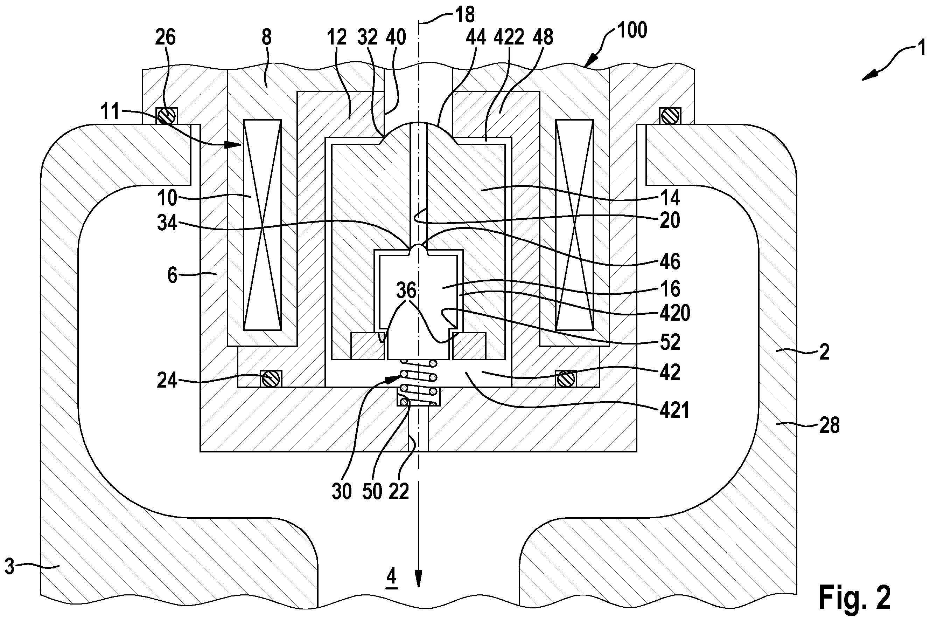

**Fig.2** zeigt ein zweites Ausführungsbeispiel der erfindungsgemäßen Ventilvorrichtung 100 für ein gasförmiges Medium, insbesondere Wasserstoff, in der erfindungsgemäßen Tankvorrichtung 1 zur Speicherung eines gasförmigen Mediums, insbesondere Wasserstoff, im Längsschnitt.

Das zweite Ausführungsbeispiel entspricht in Funktion und Aufbau weitestgehend dem ersten Ausführungsbeispiel. Bauteile mit gleicher Funktion wurden mit derselben Bezugsziffer bezeichnet.

In dem zweiten Ausführungsbeispiel weist der erste Magnetanker 14 einen Absatz 36 auf, welcher mit einem Absatz 52 des zweiten Magnetankers 16 zusammenwirkt. Somit wirkt der zweite Magnetanker 16 bei Öffnung des zweiten Dichtsitzes 34 bei dessen Längsbewegung als Mitnehmer für den ersten Magnetanker 14, wodurch die Öffnung des ersten Dichtsitzes 32 beschleunigt wird.

## Patentansprüche

1. Tankvorrichtung (1) zur Speicherung eines gasförmigen Mediums, insbesondere Wasserstoff, mit einem Tank (2) und einer Ventilvorrichtung (100) mit einem Ventilgehäuse (6) und einem darin angeordneten entlang einer Längsachse (18) bewegbaren ersten Magnetanker (14), welcher erster Magnetanker (14) mit einem ersten Dichtsitz (32) zum Öffnen und Schließen einer Auslassöffnung (40) zusammenwirkt, wobei in dem Ventilgehäuse (6) ein entlang einer Längsachse (18) bewegbarer zweiter Magnetanker (16) angeordnet ist, welcher zweiter Magnetanker (16) in einer Ausnehmung (38) des ersten Magnetankers (14) zumindest teilweise aufgenommen ist und welcher zweiter Magnetanker (16) mit einem zweiten Dichtsitz (34) zum Öffnen und Schließen einer in dem ersten Magnetanker (14) ausgebildeten Durchlassöffnung (20) zusammenwirkt, wobei der erste Magnetanker (14) und der zweite Magnetanker (16) von einer Magneteinrichtung (11) umfasst sind, durch welche Magneteinrichtung (11) der erste Magnetanker (14) und der zweite Magnetanker (16) mittels genau einer Magnetspule (10) entlang der Längsachse (18) bewegbar sind, wobei durch die Ventilvorrichtung (100) ein Durchflussquerschnitt an gasförmigem Medium, insbesondere Wasserstoff, aus dem Tank (2) steuerbar ist, **dadurch gekennzeichnet, dass** der Tank (2) ein Tankgehäuse (3) mit einem Halsbereich (28) umfasst, in welchem Halsbereich (28) die Ventilvorrichtung (100) angeordnet ist, wobei das Ventilgehäuse (6) in das Tankgehäuse (3) zumindest teilweise integriert ist und das Ventilgehäuse (6) mittels eines Dichtelements (26) einen Tankinnenraum (4) des Tanks (2) abdichtet.

2. Tankvorrichtung (1) nach Anspruch 1, **dadurch gekennzeichnet, dass** die Magnetspule (10) ein Spulengehäuse (8) aufweist und die Magnetspule (10) den ersten Magnetanker (14) und den zweiten Magnetanker (16) in dem Ventilgehäuse (6) zumindest teilweise umgibt.

3. Tankvorrichtung (1) nach einem der vorhergehenden Ansprüche, **dadurch gekennzeichnet, dass** in dem Ventilgehäuse (6) eine Feder (30) angeordnet ist, welche Feder (30) den zweiten Magnetanker (16) mit einer Kraft in Richtung des zweiten Dichtsitzes (34) beaufschlagt, wodurch der erste Magnetanker (14) mit einer Kraft in Richtung des ersten Dichtsitzes (32) beaufschlagt ist.

4. Tankvorrichtung (1) nach einem der vorhergehenden Ansprüche, **dadurch gekennzeichnet, dass** in dem Ventilgehäuse (6) ein Anschlagselement (12) angeordnet ist, an welchem Anschlagselement (12) der erste Dichtsitz (32) ausgebildet ist.

5. Tankvorrichtung (1) nach einem der vorhergehenden Ansprüche, **dadurch gekennzeichnet, dass** ein Strömungsquerschnitt an dem ersten Dichtsitz (32) größer ist als ein Strömungsquerschnitt an dem zweiten Dichtsitz (34).

6. Tankvorrichtung (1) nach einem der vorhergehenden Ansprüche, **dadurch gekennzeichnet, dass** der erste Magnetanker (14) einen Absatz (36) aufweist, welcher Absatz (36) mit einem Absatz (52) des zweiten Magnetankers (16) zusammenwirkt und bei einer Längsbewegung des zweiten Magnetankers (16) dieser als Mitnehmer für den ersten Magnetanker (14) dient.

7. Brennstoffzellenanordnung mit einer Tankvorrichtung (1) zur Speicherung von Wasserstoff für den Betrieb einer Brennstoffzelle nach einem der vorhergehenden Ansprüche.

## Claims

1. Tank device (1) for storing a gaseous medium, in particular hydrogen, having a tank (2) and a valve device (100) having a valve housing (6) and a first solenoid armature (14) that is arranged therein and is movable along a longitudinal axis (18), which first solenoid armature (14) cooperates with a first sealing seat (32) for opening and closing an outlet opening (40), wherein a second solenoid armature (16) that is movable along a longitudinal axis (18) is arranged in the valve housing (6), which second solenoid armature (16) is at least partially accommodated in a recess (38) in the first solenoid armature (14) and which second solenoid armature (16) cooperates with a second sealing seat (34) for opening and closing a passage opening (20) formed in the first solenoid armature (14), wherein the first solenoid armature (14) and the second solenoid armature (16) are comprised by a solenoid device (11), by which solenoid device (11) the first solenoid armature (14) and the second solenoid armature (16) are movable along the longitudinal axis (18) by means of exactly one magnet coil (10), wherein a through-flow cross section for gaseous medium, in particular hydrogen, from the tank (2) is controllable by the valve device (100), **characterized in that** the tank (2) comprises a tank housing (3) having a neck region (28), in which neck region (28) the valve device (100) is arranged, wherein the valve housing (6) is at least partially integrated into the tank housing (3) and the valve housing (6) seals off a tank interior (4) of the tank (2) by means of a sealing element (26).

2. Tank device (1) according to Claim 1, **characterized in that** the magnet coil (10) has a coil housing (8) and the magnet coil (10) at least partially surrounds the first solenoid armature (14) and the second solenoid armature (16) in the valve housing (6).

3. Tank device (1) according to either of the preceding claims, **characterized in that** a spring (30) is arranged in the valve housing (6), which spring (30) subjects the second solenoid armature (16) to a force in the direction of the second sealing seat (34), with the result that the first solenoid armature (14) is subjected to a force in the direction of the first sealing seat (32).

4. Tank device (1) according to one of the preceding claims, **characterized in that** a stop element (12) is arranged in the valve housing (6), on which stop element (12) the first sealing seat (32) is formed.

5. Tank device (1) according to one of the preceding claims, **characterized in that** a flow cross section at the first sealing seat (32) is larger than a flow cross section at the second sealing seat (34).

6. Tank device (1) according to one of the preceding claims, **characterized in that** the first solenoid armature (14) has a shoulder (36), which shoulder (36) cooperates with a shoulder (52) of the second solenoid valve (16), and during a longitudinal movement of the second solenoid valve (16), the latter acts as a driver for the first solenoid valve (14).

7. Fuel cell arrangement having a tank device (1) for storing hydrogen for the operation of a fuel cell according to one of the preceding claims.

## Revendications

1. Dispositif de réservoir (1) pour le stockage d'un milieu gazeux, notamment d'hydrogène, avec un réservoir (2) et un dispositif de soupape (100) avec un boîtier de soupape (6) et un premier induit magnétique (14) déplaçable le long d'un axe longitudinal (18) agencé dans celui-ci, lequel premier induit magnétique (14) coopère avec un premier siège d'étanchéité (32) pour l'ouverture et la fermeture d'une ouverture de sortie (40), un deuxième induit magnétique (16) déplaçable le long d'un axe longitudinal (18) étant agencé dans le boîtier de soupape (6), lequel deuxième induit magnétique (16) est logé au moins partiellement dans un évidement (38) du premier induit magnétique (14) et lequel deuxième induit magnétique (16) coopère avec un deuxième siège d'étanchéité (34) pour l'ouverture et la fermeture d'une ouverture de passage (20) formée dans le premier induit magnétique (14), le premier induit magnétique (14) et le deuxième induit magnétique (16) étant entourés par un appareil magnétique (11), appareil magnétique (11) par lequel le premier induit magnétique (14) et le deuxième induit magnétique (16) peuvent être déplacés le long de l'axe longitudinal (18) au moyen d'exactement une bobine magnétique (10), une section transversale d'écoulement de milieu gazeux, notamment d'hydrogène, à partir du réservoir (2) pouvant être commandée par le dispositif de soupape (100), **caractérisé en ce que** le réservoir (2) comprend un boîtier de réservoir (3) avec une zone de col (28), zone de col (28) dans laquelle le dispositif de soupape (100) est agencé, le boîtier de soupape (6) étant intégré au moins partiellement dans le boîtier de réservoir (3) et le boîtier de soupape (6) étanchéifiant un espace intérieur de réservoir (4) du réservoir (2) au moyen d'un élément d'étanchéité (26).

2. Dispositif de réservoir (1) selon la revendication 1, **caractérisé en ce que** la bobine magnétique (10) présente un boîtier de bobine (8) et la bobine magnétique (10) entoure au moins partiellement le premier induit magnétique (14) et le deuxième induit magnétique (16) dans le boîtier de soupape (6).

3. Dispositif de réservoir (1) selon l'une quelconque des revendications précédentes, **caractérisé en ce qu'**un ressort (30) est agencé dans le boîtier de soupape (6), lequel ressort (30) sollicite le deuxième induit magnétique (16) avec une force en direction du deuxième siège d'étanchéité (34), le premier induit magnétique (14) étant ainsi sollicité avec une force en direction du premier siège d'étanchéité (32).

4. Dispositif de réservoir (1) selon l'une quelconque des revendications précédentes, **caractérisé en ce qu'**un élément de butée (12) est agencé dans le boîtier de soupape (6), élément de butée (12) sur lequel est formé le premier siège d'étanchéité (32).

5. Dispositif de réservoir (1) selon l'une quelconque des revendications précédentes, **caractérisé en ce qu'**une section transversale d'écoulement sur le premier siège d'étanchéité (32) est plus grande qu'une section transversale d'écoulement sur le deuxième siège d'étanchéité (34).

6. Dispositif de réservoir (1) selon l'une quelconque des revendications précédentes, **caractérisé en ce que** le premier induit magnétique (14) présente un épaulement (36), lequel épaulement (36) coopère avec un épaulement (52) du deuxième induit magnétique (16) et, lors d'un déplacement longitudinal du deuxième induit magnétique (16), celui-ci sert d'entraîneur pour le premier induit magnétique (14).

7. Agencement de pile à combustible avec un dispositif de réservoir (1) pour le stockage d'hydrogène pour le fonctionnement d'une pile à combustible selon l'une quelconque des revendications précédentes.
